# FASCICULE DE BREVET EUROPEEN

(11) **EP 2 984 302 B1**
(45) Date de publication et mention de la délivrance du brevet: **22.02.2017**
(21) Numéro de dépôt: 14726679.5
(22) Date de dépôt: 11.04.2014
(51) Int. Cl.: F01D 25/24, F02C 7/047, F01D 25/02

(54) **DISPOSITIF DE DÉGIVRAGE D'UN BEC DE SÉPARATION DE TURBOMACHINE AÉRONAUTIQUE**
VORRICHTUNG ZUR ENTEISUNG EINES AERONAUTISCHEN TURBOMASCHINENSEPARATORS
DEVICE FOR DEICING AN AERONAUTICAL TURBOMACHINE SEPARATOR

(30) Priorité: 11.04.2013 FR 1353296
(43) Date de publication de la demande: 17.02.2016
(73) Titulaire: SNECMA, 75015 Paris (FR)
(72) Inventeur: GOMANNE, Benoît, Jean, Henri, F-77550 Moissy-Cramayel Cedex (FR); BRAULT, Michel, Gilbert, Roland, F-77550 Moissy-Cramayel Cedex (FR)
(74) Mandataire: Desormiere, Pierre-Louis
(86) Numéro de dépôt international: PCT/FR2014/050883
(87) Numéro de publication internationale: WO 2014/167259

(56) Documents cités:
- WO-A2-2010/012899
- GB-A- 986 878
- GB-A- 2 259 679
- US-A1- 2003 035 719

## Description

### Arrière-plan de l'invention

La présente invention se rapporte au domaine général des becs de séparation de flux équipant des turbomachines aéronautiques du type à double corps et double flux. Elle concerne plus précisément un dispositif visant à assurer un dégivrage de ces becs de séparation.

Dans une turbomachine aéronautique du type à double corps et double flux, la veine d'écoulement du flux primaire (ou flux chaud) et la veine d'écoulement du flux secondaire (ou flux froid) sont séparées en aval de la soufflante par un bec de séparation.

Afin d'optimiser la masse de la turbomachine en conservant le même rapport entre les sections des veines d'écoulement des flux primaire et secondaire, les motoristes cherchent à diminuer les rayons de ces veines. Pour notamment diminuer le rayon interne de la veine d'écoulement du flux secondaire, il est avantageux de limiter autant que possible l'encombrement radial de la zone de raccordement du bec de séparation sur le carter structural situé en aval du bec de séparation. La minimisation de cet encombrement radial présente également un intérêt aérodynamique en permettant d'accroître la colinéarité entre les flux primaire et secondaire.

Par ailleurs, le bec de séparation est un élément interne de la turbomachine qui est particulièrement exposé à la formation de glace en conditions givrantes de vol. En effet, dans de telles conditions, de l'air humide et de la pluie peuvent pénétrer à l'intérieur de la turbomachine et se déposer sur le bec de séparation sous la forme de blocs de glace, avec le risque que de tels blocs de glace se détachent et viennent endommager le compresseur situé en aval dans la veine d'écoulement du flux primaire.

Pour éviter la formation de blocs de glace sur le bec de séparation, il est connu de venir injecter à l'intérieur de celui-ci de l'air chaud prélevé sur un étage du compresseur de la turbomachine. Cet air est typiquement acheminé par des conduits rapportés qui traversent le carter et viennent se fixer sur le bec de séparation pour y décharger l'air chaud. On pourra notamment se référer au document US 2003/0035719 qui décrit un exemple d'un tel dispositif de dégivrage.

Cependant, les solutions connues pour acheminer de l'air destiné à éviter la formation de blocs de glace sur le bec de séparation ne sont pas compatibles avec la recherche d'une diminution de l'encombrement radial de la zone de raccordement du bec de séparation sur le carter.

### Objet et résumé de l'invention

Il existe donc un besoin de pouvoir disposer d'un dispositif de dégivrage d'un bec de séparation en utilisant un encombrement radial minimum.

Ce but est atteint grâce à un dispositif de dégivrage d'un bec de séparation de turbomachine aéronautique, comprenant un bec de séparation destiné à être positionné à l'aval d'une soufflante de la turbomachine pour former une séparation entre des canaux annulaires d'écoulement d'un flux primaire et d'un flux secondaire issus de la turbomachine, et un carter fixé au bec de séparation dans le prolongement aval de celui-ci, le carter ayant une virole interne délimitant à l'extérieur le canal d'écoulement du flux primaire, le carter comprenant, conformément à l'invention, au moins un conduit d'air intégré à la virole interne pour former une seule et même pièce avec celle-ci, le conduit d'air s'ouvrant en aval vers une alimentation en air et débouchant à l'amont à l'intérieur du bec de séparation

Intégrer le conduit d'air à la virole interne du carter pour ne former qu'une seule et même pièce permet de limiter l'encombrement radial du bec de séparation. En effet, par rapport à une solution de dégivrage de l'art antérieur, l'accostage du conduit d'air sur le bec de séparation est intégré à l'accostage de la virole interne du carter, ce qui limite d'autant l'encombrement radial de l'ensemble. En d'autres termes, l'intégration du conduit d'air à la virole interne du carter permet de déporter vers l'aval la fixation du conduit d'air sur le bec de séparation et ainsi d'obtenir une mutualisation de l'accostage de celui-ci avec le bec de séparation.

De préférence, le carter est réalisé de fonderie à l'aide d'un moule présentant un noyau réservant un emplacement pour le conduit d'air. Le carter peut être réalisé à partir d'un alliage de titane.

L'alimentation en air peut être un tube d'alimentation en air qui est raccordé à une extrémité aval à une rampe d'injection. Dans ce cas, le carter peut comprendre six conduits d'air espacés angulairement les uns des autres et raccordés à la même rampe d'injection.

Le conduit d'air peut déboucher à l'intérieur d'une cavité de dégivrage formée dans le bec de séparation et s'ouvrant dans le canal d'écoulement du flux primaire.

Avantageusement, le conduit d'air est dépourvu de fixations sur le bec de séparation.

L'invention a également pour objet une turbomachine aéronautique comprenant un dispositif de dégivrage tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle et en coupe longitudinale d'une turbomachine aéronautique équipée d'un dispositif de dégivrage conforme à l'invention ;
- la figure 2 est une vue en perspective du dispositif de dégivrage de la figure 1 ; et
- la figure 3 est une vue en coupe longitudinale de la figure 2.

### Description détaillée de l'invention

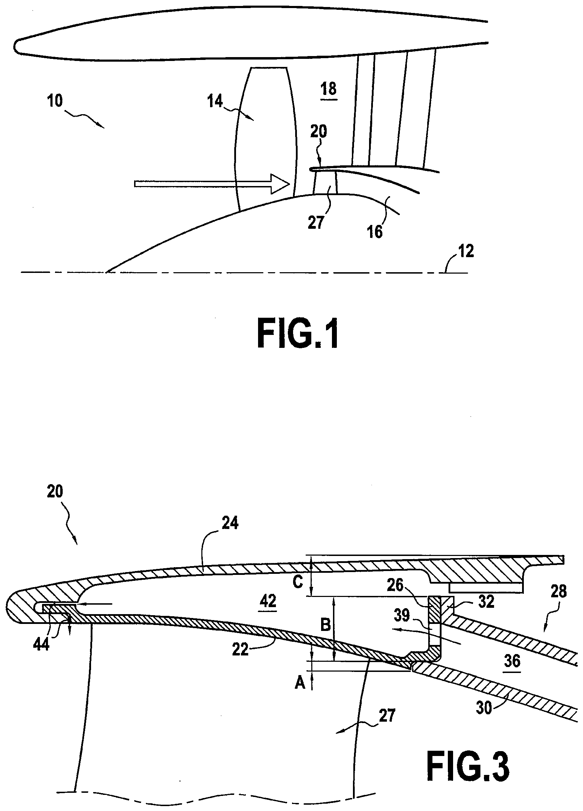

La figure 1 représente partiellement une turbomachine aéronautique 10 de type à double corps et double flux à laquelle s'applique l'invention.

De façon connue en soi, la turbomachine 10 est axisymétrique par rapport à un axe longitudinal 12 et comprend une entrée à son extrémité amont qui reçoit de l'air extérieur, cet air venant alimentée une soufflante 14.

En aval de la soufflante 14, l'air se répartit entre une veine (ou canal) d'écoulement de flux primaire 16 et une veine d'écoulement de flux secondaire 18 disposée concentriquement autour de la veine d'écoulement de flux primaire. Ces deux veines 16, 18 sont séparées l'une de l'autre par un bec de séparation 20.

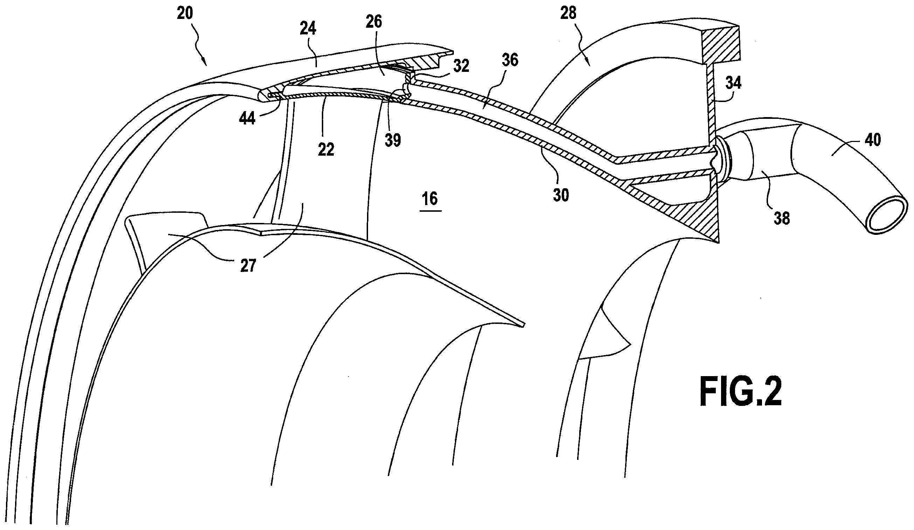

Comme représenté sur les figures 2 et 3, le bec de séparation 20 a une section longitudinale en forme de V et comprend une paroi annulaire interne 22 délimitant à l'extérieur la veine d'écoulement de flux primaire 16 et une paroi annulaire externe 24 délimitant à l'intérieur la veine d'écoulement de flux secondaire 18. A son extrémité aval, la paroi interne 22 du bec de séparation se prolonge par une bride annulaire 26 s'étendant radialement vers la paroi externe 24.

Une rangée d'aubes d'entrée 27 (ou IGV pour « Inlet Guide Vanes ») est fixée sur la paroi interne 22 du bec de séparation.

En aval, le bec de séparation 20 est fixé à un carter structural 28 ayant une virole interne 30 délimitant à l'extérieur la veine d'écoulement de flux primaire 16 dans le prolongement aval de la paroi interne 22 du bec de séparation.

Plus précisément, à son extrémité amont, la virole interne 30 du carter structural 28 se prolonge par une bride annulaire amont 32 qui s'étend radialement vers l'extérieur et qui est fixée sur la bride 26 du bec de séparation par des systèmes de fixation de type vis/écrous (non représentés sur les figures) répartis autour de l'axe longitudinal 12 de la turbomachine.

Au niveau de son extrémité aval, la virole interne 30 du carter se prolonge également par une bride annulaire aval 34 s'étendant radialement vers l'extérieur et destinée à permettre une fixation du carter sur un autre élément de la turbomachine (non représenté sur les figures).

Par ailleurs, une virole externe (non représentée sur les figures) est destiné à être fixée sur le carter 28, cette virole externe délimitant à l'intérieur la veine d'écoulement de flux secondaire 18 dans le prolongement aval de la paroi externe 24 du bec de séparation.

Conformément à l'invention, le carter 28 comprend au moins un conduit d'air 36 qui est intégré à la virole interne 30 de celui-ci pour former une seule et même pièce avec celle-ci, ce conduit d'air 36 s'ouvrant en aval vers un tube d'alimentation en air 38 et débouchant à l'amont à l'intérieur du bec de séparation 20.

A cet effet, le carter 28 peut être réalisé (par exemple en alliage de titane) de fonderie à l'aide d'un moule présentant un ou plusieurs noyaux réservant autant d'emplacements pour le ou les conduits d'air 36 (le conduit d'air 36 est moulé avec le carter). On pourra par exemple utiliser un procédé de fonderie à la cire perdue ou un procédé de fonderie sable. Alternativement, on pourra avoir recours à de la mécano-soudure ou à une taille dans la masse. Encore alternativement, si le conduit d'air est constitué d'une ou plusieurs parties rectilignes, il peut être percé directement dans le carter.

De la sorte, le ou les conduits d'air 36 et le carter 28 ne forment qu'une seule et même pièce. On notera en particulier que ce ou ces conduits d'air ne sont pas des pièces rapportées et à ce titre sont dépourvues de fixations sur le bec de séparation.

De façon plus précise, le conduit d'air 36 est formé de sorte à s'étendre le long de l'axe longitudinal 12 de la turbomachine entre la bride amont 32 et la bride aval 34 de la virole interne 30 du carter. Le conduit d'air 36 peut d'ailleurs être en partie formé avec cette virole interne 30.

A son extrémité amont, le conduit d'air 36 débouche dans à l'intérieur du bec de séparation en traversant un orifice 39 pratiqué dans la bride 26 de la paroi interne 22 de celui-ci, et à son extrémité aval vient se raccorder au niveau de la bride aval 34 de la virole interne à un tube d'alimentation en air 38.

De préférence, le carter 28 comprend plusieurs conduits d'air 36 (par exemple six) espacés angulairement les uns des autres autour de l'axe longitudinal 12 de la turbomachine. Ces conduits d'air 36 débouchent chacun dans un tube d'alimentation en air 38, les tubes d'alimentation en air débouchant dans une même rampe d'injection 40 centrée sur l'axe longitudinal 12 de la turbomachine.

De façon connue en soi, la rampe d'injection 40 est elle-même alimentée en air prélevé sur un étage d'un compresseur de la turbomachine (non représenté sur les figures).

A leur extrémité amont, chaque conduit d'air 36 débouche à l'intérieur d'une cavité de dégivrage 42 formée à l'intérieur du bec de séparation 20 et s'ouvrant dans la veine d'écoulement du flux primaire 16. La cavité de dégivrage 42 est délimitée radialement par les parois interne et externe 22, 24 et axialement par la bride 26.

Cette cavité de dégivrage 42 s'ouvre dans la veine d'écoulement du flux primaire 16 par l'intermédiaire de fentes de passage d'air 44 pratiquées dans la paroi interne 22 et la paroi externe 24 du bec de séparation.

Le fonctionnement d'un tel dispositif de dégivrage découle de manière évidente de ce qui précède. De l'air comprimé (et donc chaud) est prélevé sur un étage de compresseur de la turbomachine, distribué autour de l'axe longitudinal de la turbomachine par la rampe d'injection 40 et injecté dans chaque conduit d'air 36 par les tubes d'alimentation en air 38. L'air circule dans ces conduits d'air 36 de l'aval vers l'amont et débouche dans la cavité de dégivrage 42 formée à l'intérieur du bec de séparation 20. Cet air chaud permet ainsi de réchauffer les parois 22, 24 de ce bec de séparation pour éviter toute formation de glace en conditions givrantes de vol. L'air est ensuite évacué dans la veine d'écoulement du flux primaire 16 en empruntant les fentes de passage d'air 44.

Comme représenté plus précisément sur la figure 3, un tel dispositif de dégivrage présente un encombrement radial qui est minimal. Cet encombrement se décompose de la manière suivante : l'encombrement A correspondant à l'encombrement radial de l'accostage de la virole interne 30 du carter 28, l'encombrement B correspondant à l'encombrement radial de l'accostage du conduit d'air 36 et l'encombrement C correspondant à l'encombrement radial de l'accostage de la virole externe (non représentée) avec le bec de séparation.

Un tel encombrement radial est particulièrement réduit, notamment du fait que l'accostage du conduit d'air 36 avec le bec de séparation est ici intégré à l'accostage de la virole interne 30 du carter. Un tel gain en encombrement radial permet, à iso rapport entre les sections des veines d'écoulement, un gain de masse pour la turbomachine.

## Revendications

1. Dispositif de dégivrage d'un bec de séparation de turbomachine aéronautique, comprenant :
un bec de séparation (20) destiné à être positionné à l'aval d'une soufflante (14) de la turbomachine pour former une séparation entre des canaux annulaires d'écoulement d'un flux primaire (16) et d'un flux secondaire (18) issus de la turbomachine ; et
un carter (28) fixé au bec de séparation dans le prolongement aval de celui-ci, le carter ayant une virole interne (30) délimitant à l'extérieur le canal d'écoulement du flux primaire ;
**caractérisé en ce que** le carter comprend au moins un conduit d'air (36) intégré à la virole interne pour former une seule et même pièce avec celle-ci, le conduit d'air s'ouvrant en aval vers une alimentation en air (38) et débouchant à l'amont à l'intérieur du bec de séparation.

2. Dispositif selon la revendication 1, dans lequel le carter est réalisé de fonderie à l'aide d'un moule présentant un noyau réservant un emplacement pour le conduit d'air.

3. Dispositif selon la revendication 2, dans lequel le carter est réalisé à partir d'un alliage de titane.

4. Dispositif selon l'une quelconque des revendications 1 à 3, dans lequel l'alimentation en air est un tube d'alimentation en air (38) qui est raccordé à une extrémité aval à une rampe d'injection (40).

5. Dispositif selon la revendication 4, dans lequel le carter comprend six conduits d'air (36) espacés angulairement les uns des autres et raccordés à la même rampe d'injection (40).

6. Dispositif selon l'une quelconque des revendications 1 à 5, dans lequel le conduit d'air (36) débouche à l'intérieur d'une cavité de dégivrage (42) formée dans le bec de séparation et s'ouvrant dans le canal d'écoulement du flux primaire (16).

7. Dispositif selon l'une quelconque des revendications 1 à 5, dans lequel le conduit d'air (36) est dépourvu de fixations sur le bec de séparation.

8. Turbomachine aéronautique comprenant un dispositif de dégivrage selon l'une quelconque des revendications 1 à 7.

## Patentansprüche

1. Vorrichtung zur Enteisung eines Trennschnabels einer luftfahrttechnischen Turbomaschine, umfassend:
einen Trennschnabel (20), welcher dazu bestimmt ist, stromab eines Gebläses (14) der Turbomaschine angeordnet zu werden, um eine Trennung zwischen ringförmigen Strömungskanälen eines Primärstroms (16) und eines Sekundärstroms (18), die aus der Turbomaschine ausgetreten sind, auszubilden, und
ein Gehäuse (28), das an dem Trennschnabel in der stromabwärtigen Verlängerung dessen befestigt ist, wobei das Gehäuse einen Innenring (30), welcher den Strömungskanal des Primärstroms außen begrenzt, aufweist,
**dadurch gekennzeichnet, dass** das Gehäuse wenigstens einen Luftkanal (36) umfasst, der in den Innenring integriert ist, um mit diesem ein und dasselbe Teil zu bilden, wobei der Luftkanal sich stromab in Richtung einer Luftzufuhr (38) öffnet und stromauf in den Trennschnabel mündet.

2. Vorrichtung nach Anspruch 1, bei der das Gehäuse mit Hilfe einer Form, welche einen einen Platz für den Luftkanal aussparenden Kern aufweist, im Gießverfahren hergestellt ist.

3. Vorrichtung nach Anspruch 2, bei der das Gehäuse aus einer Titanlegierung hergestellt ist.

4. Vorrichtung nach einem der Ansprüche 1 bis 3, bei der die Luftzufuhr ein Luftzufuhrrohr (38) ist, das an einem stromabwärtigen Ende an eine Injektionsleitung (40) angeschlossen ist.

5. Vorrichtung nach Anspruch 4, bei der das Gehäuse sechs Luftkanäle (36), die winkelmäßig voneinander beabstandet und an die gleiche Injektionsleitung (40) angeschlossen sind, umfasst.

6. Vorrichtung nach einem der Ansprüche 1 bis 5, bei der der Luftkanal (36) in einen Enteisungshohlraum (42), der in dem Trennschnabel ausgebildet ist und sich in den Strömungskanal des Primärstroms (16) öffnet, mündet.

7. Vorrichtung nach einem der Ansprüche 1 bis 5, bei der der Luftkanal (36) keine Befestigungen an dem Trennschnabel aufweist.

8. Luftfahrttechnische Turbomaschine, umfassend eine Enteisungsvorrichtung nach einem der Ansprüche 1 bis 7.

## Claims

1. A device for deicing a separator nose of an aviation turbine engine, the device comprising:
a separator nose (20) for positioning downstream from a fan (14) of the engine to separate annular channels for passing a primary stream (16) and a secondary stream (18) coming from the engine; and
a casing (28) fastened to the separator nose so as to extend it downstream, the casing having an inner shroud (30) defining the outside of the primary stream flow passage;
the device being **characterized in that** the casing includes at least one air duct (36) incorporated in the inner shroud so as to be formed integrally therewith, the air duct opening out downstream to an air feed (38) and opening out upstream into the inside of the separator nose.

2. A device according to claim 1, wherein the casing is made by casting using a mold having a core occupying a location for the air duct.

3. A device according to claim 2, wherein the casing is made out of a titanium alloy.

4. A device according to any one of claims 1 to 3, wherein the air feed is an air feed tube (38) that is connected at an upstream end to an injection manifold (40).

5. A device according to claim 4, wherein the casing has six air ducts (36) that are angularly spaced about from one another and that are connected to a single injection manifold (40).

6. A device according to any one of claims 1 to 5, wherein the air duct (36) opens out to the inside of a deicing cavity (42) formed in the separator nose and opens out into the primary stream flow channel (16).

7. A device according to any one of claims 1 to 5, wherein the air duct (36) does not have any fastenings on the separator nose.

8. An aviation turbine engine including a deicer device according to any one of claims 1 to 7.
